# EUROPEAN PATENT SPECIFICATION

(11) **EP 3 779 213 B1**
(45) Date of publication and mention of the grant of the patent: **22.01.2025**
(21) Application number: 20020340.4
(22) Date of filing: 28.07.2020
(51) Int. Cl.: F16B 7/04

(54) **CONNECTION ARRANGEMENT**
VERBINDUNGSANORDNUNG
AGENCEMENT DE CONNEXION

(30) Priority: 14.08.2019 GB 201911628
(43) Date of publication of application: 17.02.2021
(73) Proprietor: Stalcom Automotive Technologies Limited, Pershore, Worcestershire WR10 2FW (GB)
(72) Inventor: Mustard, Robert R., Pershore, Worcestershire WR10 2ES (GB); Dodd, Robin, Leigh, Worcester WR6 5LD (GB)
(74) Representative: Bazant-Hegemark, Florian

(56) References cited:
- DE-A1- 102009 010 428

## Description

This invention relates to a connection arrangement, and in particular to a connection arrangement whereby two or more elongate components can be secured to one another. The invention relates particularly to an arrangement that can be fabricated from extruded components, although could make use of components fabricated using other techniques, if desired.

Where there is a requirement to secure together two or more elongate components in order to fabricate, for example, chassis or support framework for a vehicle or for other purposes, then a range of securing techniques may be used. The selection of which securing technique to use will depend upon a number of factors, for example upon the materials of the elongate components, and the load bearing requirements of the connection between the components. By way of example, the elongate components may be riveted or bolted to one another, or secured to one another using other suitable forms of fastener, or they may be welded to one another or a suitable adhesive may be applied therebetween. It will be appreciated that these represent merely examples of techniques by which two or more components may be secured to one another, and that a wide range of other techniques are known. Whilst these techniques are well known and often perform satisfactorily, there are applications in which they are unsuitable or are difficult to use, for example as a result of the nature of the connection to be formed.

DE102009010428A1 discloses a device with two shank-shaped elements arranged at an angle to each other to cover two side surfaces of profile rails, and a hook-shaped element at one of the shank-shaped elements for producing a force-fit and form-fit engagement at the rails.

It is an object of the invention to provide an alternative technique by which two or more components may be secured to one another which is of relatively simple and convenient form.

The invention is set out in the appended set of claims.

According to one aspect of the invention there is provided a connection arrangement comprising a first elongate component, a second elongate component and a connector member, wherein the first elongate component is provided with a channel of re-entrant form, and the connector member includes a hook receivable within the channel, wherein the channel includes a first lip extending towards a plane in which a face of the first component is free edge of the lip being spaced from the said plane by a first spacing, and the hook includes a second lip having a height less than or equal to the first spacing.

Such an arrangement is advantageous in that the hook can be introduced into the channel without requiring a part of the hook to project beyond the said plane during the assembly process. Fitting of the hook into the channel is thus possible in a wide range of configurations, including a number that would not be possible with hooks and channels of certain other forms.

According to the invention, a hook of a second, similar connector member can be received within the channel with the first mentioned hook already in situ.

The connector member preferably includes a first planar section. At least part of the first planar section is preferably attached to the first elongate component. By way of example, it may be bonded thereto using a suitable adhesive. The connector member preferably further includes a second planar section. At least part of the second planar section is preferably attached to the second elongate component. By way of example, it may be similarly bonded thereto using a suitable adhesive. The first and second planar sections may be coplanar. Alternatively, they may be angled to one another.

Whilst the connector member may be secured to the first and second elongate components using a suitable adhesive, it will be appreciated that other securing techniques may be used instead of or in addition to the use of the adhesive bond. By way of example rivets, bolts or other fasteners may be used, either alone or in conjunction with a suitable adhesive.

According to a second aspect of the invention there is provided a connector arrangement comprising a first elongate component, a second elongate component and a connector member, wherein the first elongate component is provided with a channel of re-entrant form, and the connector member includes a hook receivable within the channel, wherein the connector member includes a first planar section, at least part of the first planar section being attached to the first elongate component, and the connector member further including a second planar section, at least part of the second planar section is being attached to the second elongate component.

The first and second planar sections may be coplanar. Alternatively, they may be angled to one another.

The invention will further be described, by way of example, with reference to the accompanying drawings, in which:
Figure 1 is a perspective view, partially exploded, illustrating a connection arrangement in accordance with an embodiment of the invention;
Figures 2 to 4 are views illustrating nature of the connection arrangement in greater detail;
Figures 5 to 7 are views from different angles illustrating a connection arrangement in accordance with a second embodiment of the invention;
Figures 8 and 9 are views illustrating the connection member of the embodiment of Figures 5 to 7; and
Figure 10 is a diagrammatic representation illustrating part of the connection arrangement in greater detail.

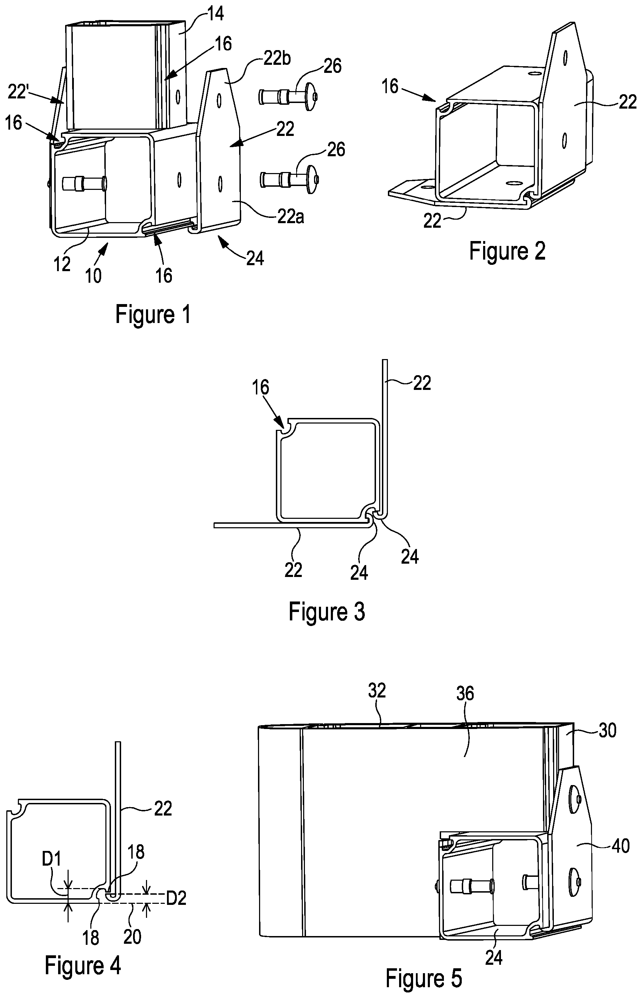

Referring firstly to Figure 1, a connection arrangement 10 is illustrated for achieving a connection between a first elongate component 12 (only a part of which can be seen in Figure 1) and a second elongate component 14 (again, only part of which can be seen in Figure 1). The connection arrangement 10, in this embodiment, is intended for use in the fabrication of a chassis or framework of a vehicle. However, it will be appreciated that the invention is not restricted in this regard and may be employed in a wide range of applications. In the arrangement shown, the first and second elongate components 12, 14 are arranged perpendicularly to one another with an end of the second elongate component 14 butting up against the first elongate component 12. However, it will be appreciated that this need not always be the case.

The first and second elongate components 12, 14 are each in the form of lengths of an extruded box section material. By way of example, the material may be of aluminium or the like. However, the invention is not restricted in this regard and may be applied to connections between components of other materials and of other shapes. Each of the first and second elongate components 12, 14 includes, along opposing corners thereof, a channel or groove 16. The grooves 16 are shaped to be of re-entrant form, that is to say that the mouths thereof are of narrower form that an internal width thereof. Whilst in the illustrated arrangement each elongate component 12, 14 is formed with two grooves 16, it will be appreciated that a greater number, or fewer, may be provided if desired.

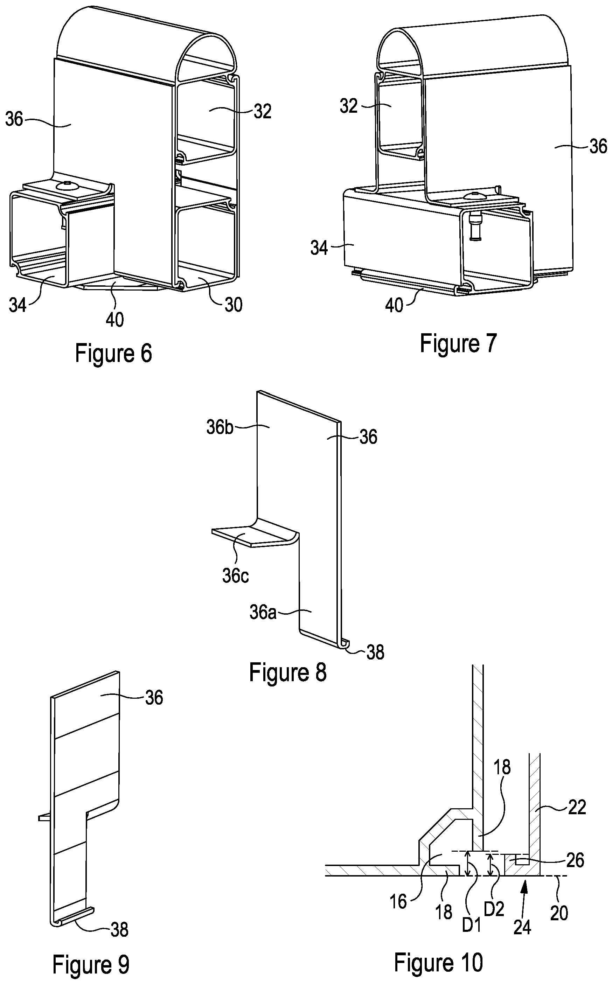

As best shown in Figure 10, the shapes of the grooves 16 are such that each groove 16 is defined by a pair of lips 18, and the groove 16 defines a spacing D1 of a free edge of one of the lips 18 from a plane 20 defined by a face of the component.

The connection arrangement 10 further comprises a connector member 22. In the embodiment shown in Figure 1, the connector member 22 is of generally planar form, an edge part of which is shaped to define a hook 24. The hook 24 includes a lip 26 that extends generally parallel to the plane of the main part of the connector member 22. The shape of the hook 24 is such that a spacing D2 is defined between a free edge of the lip 26 and a part of the hook 24 most remote from the free edge of the lip 26.

In use, the hook 24 of the connector member 22 is hooked into one of the grooves 16 of the first elongate component 12. The design of the groove 16 and of the hook 24 is such that the spacing D1 is greater than the spacing D2. Consequently, the hook 24 can be fitted into the groove without requiring any part of the connector member 24 to project beyond the plane 20 of the first elongate component 12. This is advantageous in that it increases the range of designs of connection that can be achieved using the invention.

Once the connector member 22 has been hooked into the groove 16, the planar part of the connector member 22 can be secured to adjacent parts of the first and second elongate components 12, 14. In the arrangement illustrated, this is achieved through the use of rivets 26 or other suitable fasteners. It is envisaged, however, that in practise the connector member 22 will be secured to the elongate components 12, 14 using a suitable adhesive or bonding technique, with the rivets 26 or other fasteners (if provided) being used to hold the connector member 22 in position whilst the adhesive sets or cures. Where an adhesive or the like is used, it will be appreciated that the adhesive material will be selected depending upon the materials of the first and second elongate components 12, 14 and the connector member 22, the adhesive material being compactible with and able to adhere to the material(s) of the elongate components 12, 14 and connector member 22.

As illustrated, the connector member 22 includes a first section 22a that abuts and is adhered or bonded to a face of the first elongate component 12, and a second section 22b that abuts and is adhered or bonded to a face of the second elongate component 14. In the arrangement shown in Figure 1, the first and second sections 22a, 22b are coplanar.

The first and second sections 22a, 22b may be provided with shallow pips or ribs which space the main parts of the connector member 22 from the faces of the first and second elongate components 12, 14 by a controlled distance, which is of assistance in ensuring that a desired quantity of adhesive material or the like is maintained between the connector member 22 and the first and second elongate components 12, 14.

As illustrated in Figure 1, a second connector member 22' is provided, hooked into a groove provided in the second elongate component 14, and adhered or bonded to faces of the first and second elongate components 12, 14.

It will be appreciated that the arrangement described hereinbefore provides a simple and convenient technique whereby first and second elongate components 12, 14 can be connected to one another as desired. The assembly can make use of extruded parts for the first and second elongate components 12, 14 and for the connector member 24, the parts simply requiring cutting to a desired size and shape prior to assembly. Assembly can be undertaken quickly and simply, and the arrangement lends itself to use by those with restricted mobility or dexterity as once the connector member 22 is hooked into position, the location of the hook within the groove serves to hold the connector member 22 and associated component to one another.

Figures 2 to 4 illustrate part of the connector arrangement 10 in greater detail, clearly indicating the spacings D1 and D2. As shown in Figure 2, not only do the designs of the hook 24 and groove 16 allow the hook 24 to be fitted into the groove 16 without requiring any part of the hook 24 or associated connector member 22 to project beyond the end plane 20, but also the design of the groove 16 allows the hooks 24 of two separate connector members 22 to be accommodated within a single groove 16. Accordingly, the connection arrangement 10 is able to be used in a very wide range of applications. By way of example, if desired, the arrangement of Figure 1 could be modified so that both of the connector members are hooked to a single one of the grooves 16 of the first elongate component 12.

The connection shown in Figure 1 is of a relatively simple form, but it will be appreciated that the invention may be employed in the formation of connections or joints of considerably more complex form. By way of example, Figures 5 to 9 illustrate the use of the invention in the formation of a more complex connection.

In the arrangement of Figures 5 to 9, three elongate components 30, 32, 34 are secured to one another with the first and second components 30, 32 extending parallel to one another, but spaced apart from one another, and the third elongate component 34 extending perpendicularly to the first component 30.

As illustrated, a pair of connector members 36 are provided, each of which includes a hook 38, and first, second and third sections 36a, 36b, 36c to be adhered or bonded to the first, second and third components 30, 32, 34, respectively. The first and second sections 36a, 36b are coplanar, and the third section 36c is angled perpendicularly to the first and second sections 36a, 36b.

A further connector member 40 of form similar to that shown in Figure 1 is provided and used to secure the first and third components 30, 34 to one another.

As with the arrangement of Figure 1, the hook 38 is hooked into a channel or groove of the first component 30, and the regions 36a, 36b, 36c are secured, for example using a suitable adhesive bonding technique, rivets or other fasteners, to adjacent faces of the components 30, 32, 34. Another suitably shaped connector member is provided to be hooked into a groove or channel of the second component 32, and with regions for bonding or otherwise securing to the adjacent faces of the components 30, 32, 34. A robust connection between the components 30, 32, 34 can thus be formed.

It will be appreciated that the invention is advantageous in that a wide range of designs of frameworks made up of extruded box section components can be assembled or fabricated using only a few different designs of parts. By way of example, the relatively complex assembly illustrated in Figures 5 to 9 uses only three designs of extrusion, one to form the first component which has a curved face, one to form the second and third components, and one to form the various connector members, the extrusions being subject to simple cutting and bending operations to form them to the required shapes.

Whilst specific embodiments of the invention have been described herein, it will be appreciated that the invention is not restricted to the specific arrangements described but rather covers a wide range of modifications and alterations thereto falling within the scope of the invention as defined by the appended claims.

## Claims

1. A connection arrangement (10) comprising a first elongate component (12), a second elongate component (14) and a connector member (22), wherein the first elongate component (12) is provided with a channel (16) of re-entrant form, and the connector member (22) includes a hook (24) receivable within the channel (16), wherein the channel (16) includes a first lip (18) extending towards a plane (20) in which a face of the first component is located, a free edge of the lip (18) being spaced from the said plane (20) by a first spacing (D1), and the hook includes a second lip (26) having a height (D2) less than or equal to the first spacing (D1), wherein the height (D2) is defined between a free edge of the lip (26) and a part of the hook (24) most remote from the free edge of the lip (26), wherein a hook (24) of a second, similar connector member (22) can be received within the channel (16) with the first mentioned hook (24) already in situ.

2. An arrangement according to Claim 1, wherein the connector member includes a first planar section (22a).

3. An arrangement according to Claim 2, wherein at least part of the first planar section (22a) is attached to the first elongate component (14).

4. An arrangement according to Claim 3, wherein the first planar section (22a) is bonded to the first elongate component (14) using a suitable adhesive.

5. An arrangement according to any of the preceding claims, wherein the connector member (22) includes a second planar section (22b).

6. An arrangement according to Claim 5, wherein the second planar section (22b) is attached to the second elongate component (14).

7. An arrangement according to Claim 6, wherein the second planar section (22b) is bonded to the second elongate component (14) using a suitable adhesive.

8. An arrangement according to any one of Claims 5 to 7, wherein the first and second planar sections (22a, 22b) are coplanar.

9. An arrangement according to any one of Claims 5 to 7, wherein the first and second planar sections (22a, 22b) are angled to one another.

## Patentansprüche

1. Verbindungsanordnung (10), eine erste längliche Komponente (12), eine zweite längliche Komponente (14) und ein Verbinderelement (22) umfassend, wobei die erste längliche Komponente (12) mit einem Kanal (16) mit einspringender Form versehen ist und das Verbinderelement (22) einen Haken (24) enthält, der innerhalb des Kanals (16) aufnehmbar ist, wobei der Kanal (16) einen ersten Ansatz (18) enthält, der sich zu einer Ebene (20) hin erstreckt, in der sich eine Fläche der ersten Komponente befindet, wobei eine freie Kante des Ansatzes (18) von der Ebene (20) um einen ersten Abstand (D1) beabstandet ist, und der Haken einen zweiten Ansatz (26) enthält, der eine Höhe (D2) aufweist, die kleiner oder gleich dem ersten Abstand (D1) ist, wobei die Höhe (D2) zwischen einer freien Kante des Ansatzes (26) und einem Teil des Hakens (24) definiert ist, der am weitesten von der freien Kante des Ansatzes (26) entfernt ist, wobei ein Haken (24) eines zweiten, ähnlichen Verbinderelements (22) innerhalb des Kanals (16) aufgenommen werden kann, wenn sich der erste genannte Haken (24) bereits an Ort und Stelle befindet.

2. Anordnung nach Anspruch 1, wobei das Verbinderelement einen ersten ebenen Abschnitt (22a) enthält.

3. Anordnung nach Anspruch 2, wobei mindestens ein Teil des ersten ebenen Abschnitts (22a) an der ersten länglichen Komponente (14) befestigt ist.

4. Anordnung nach Anspruch 3, wobei der erste ebene Abschnitt (22a) mit der ersten länglichen Komponente (14) unter Verwendung eines geeigneten Klebstoffs verklebt ist.

5. Anordnung nach einem der vorhergehenden Ansprüche, wobei das Verbinderelement (22) einen zweiten ebenen Abschnitt (22b) enthält.

6. Anordnung nach Anspruch 5, wobei der zweite ebene Abschnitt (22b) an der zweiten länglichen Komponente (14) befestigt ist.

7. Anordnung nach Anspruch 6, wobei der zweite ebene Abschnitt (22b) mit der zweiten länglichen Komponente (14) unter Verwendung eines geeigneten Klebstoffs verklebt ist.

8. Anordnung nach einem der Ansprüche 5 bis 7, wobei der erste und der zweite ebene Abschnitt (22a, 22b) koplanar sind.

9. Anordnung nach einem der Ansprüche 5 bis 7, wobei der erste und der zweite ebene Abschnitt (22a, 22b) zueinander abgewinkelt sind.

## Revendications

1. Agencement de raccordement (10) comprenant un premier composant allongé (12), un second composant allongé (14) et un élément raccord (22), dans lequel le premier composant allongé (12) est doté d'un canal (16) de forme rentrante, et l'élément raccord (22) comprend un crochet (24) pouvant être reçu dans le canal (16), dans lequel le canal (16) comprend une première lèvre (18) s'étendant vers un plan (20) dans lequel est située une face du premier composant, un bord libre de la lèvre (18) étant espacé dudit plan (20) par un premier espacement (D1), et le crochet comprend une seconde lèvre (26) comportant une hauteur (D2) inférieure ou égale au premier espacement (D1), dans lequel la hauteur (D2) est définie entre un bord libre de la lèvre (26) et une partie du crochet (24) la plus éloignée du bord libre de la lèvre (26), dans lequel un crochet (24) d'un second élément raccord (22) similaire peut être reçu dans le canal (16) avec le premier crochet (24) mentionné déjà en place.

2. Agencement selon la revendication 1, dans lequel l'élément raccord comprend une première section plane (22a).

3. Agencement selon la revendication 2, dans lequel au moins une partie de la première section plane (22a) est fixée au premier composant allongé (14).

4. Agencement selon la revendication 3, dans lequel la première section plane (22a) est liée au premier composant allongé (14) à l'aide d'un adhésif approprié.

5. Agencement selon l'une quelconque des revendications précédentes, dans lequel l'élément raccord (22) comprend une seconde section plane (22b).

6. Agencement selon la revendication 5, dans lequel la seconde section plane (22b) est fixée au second composant allongé (14).

7. Agencement selon la revendication 6, dans lequel la seconde section plane (22b) est liée au second composant allongé (14) à l'aide d'un adhésif approprié.

8. Agencement selon l'une quelconque des revendications 5 à 7, dans lequel les première et seconde sections planes (22a, 22b) sont coplanaires.

9. Agencement selon l'une quelconque des revendications 5 à 7, dans lequel les première et seconde sections planes (22a, 22b) sont inclinées l'une par rapport à l'autre.
